# EUROPÄISCHE PATENTSCHRIFT

(11) **EP 1 525 377 B1**
(45) Veröffentlichungstag und Bekanntmachung des Hinweises auf die Patenterteilung: **14.02.2007**
(21) Anmeldenummer: 03784078.2
(22) Anmeldetag: 25.07.2003
(51) Int. Cl.: F01N 3/02, B01D 39/20, B01D 46/42

(54) **ABGASFILTER MIT MINDESTENS EINER FILTERLAGE UND VERFAHREN ZUR HERSTELLUNG EINER FILTERLAGE**
EXHAUST GAS FILTER COMPRISING AT LEAST ONE FILTER LAYER AND METHOD FOR THE PRODUCTION OF A FILTER LAYER
FILTRE A GAZ D'ECHAPPEMENT COMPORTANT AU MOINS UNE COUCHE FILTRANTE ET PROCEDE DE PRODUCTION D'UNE COUCHE FILTRANTE

(30) Priorität: 02.08.2002 DE 10235764
(43) Veröffentlichungstag der Anmeldung: 27.04.2005
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HODGSON, Jan, 53842 Troisdorf (DE); MENGELBERG, Markus, 51491 Overath (DE)
(74) Vertreter: Kahlhöfer, Hermann
(86) Internationale Anmeldenummer: PCT/EP2003/008227
(87) Internationale Veröffentlichungsnummer: WO 2004/014520

(56) Entgegenhaltungen:
- DE-A- 19 539 168
- US-A- 4 363 753
- US-A- 5 609 761
- US-A- 6 142 362

## Beschreibung

Die Erfindung bezieht sich auf einen Abgasfilter zur Reinigung eines Abgases eines Verbrennungsmotors mit mindestens einer Filterlage, sowie auf ein Verfahren zur Herstellung einer Filterlage mit zumindest einem metallischen Verstärkungsbereich.

Um Partikel aus dem Abgas eines Verbrennungsmotors, insbesondere eines Dieselmotors herauszufiltern, wurden verschiedene Filtersysteme entwickelt, z. B. auch ein sogenanntes offenes Filtersystem, das sich dadurch auszeichnet, dass die das Filtersystem bildenden Kanalwände zumindest teilweise aus porösem oder hochporösem Material aufgebaut sind. Weiterhin sind Umlenk- oder Leitstrukturen vorhanden, die bewirken, dass die Strömung mit den darin enthaltenen Partikel zu den Bereichen aus porösem oder hochporösem Material umgelenkt werden. Dabei hat sich überraschenderweise herausgestellt, dass die Partikel durch Interception und/oder Impaktion an und/oder in der porösen Kanalwand haften bleiben.

Für das Zustandekommen dieser Wirkung sind die Druckunterschiede im Strömungsprofil des strömenden Abgases von Bedeutung. Durch die Umlenkung können zusätzlich hohe lokale Unterdruck- oder Überdruckverhältnisse entstehen, die zu einem Filtrationseffekt durch die poröse Wand hindurch führen, da die obengenannten Druckunterschiede ausgeglichen werden müssen. Man spricht hier im Unterschied zu den bekannten geschlossenen Filtersystemen von einem offenen Filtersystem, weil keine Strömungssackgassen vorgesehen sind. Ein Partikelfilter wird dann als offen bezeichnet, wenn er grundsätzlich von Partikeln vollständig durchlaufen werden kann, und zwar auch von Partikeln, die erheblich größer als die eigentlich auszufilternden Partikel sind. Dadurch kann ein solcher Filter selbst bei einer Agglomeration von Partikeln während des Betriebes nicht verstopfen. Ein geeignetes Verfahren zur Messung der Offenheit eines Partikelfilters ist beispielsweise die Prüfung, bis zu welchem Durchmesser kugelförmige Partikel noch durch einen solchen Filter rieseln können. Bei den vorliegenden Anwendungsfällen ist ein Filter insbesondere dann offen, wenn Kugeln von größer oder gleich 0,1 mm Durchmesser noch hindurchrieseln können, vorzugsweise Kugeln mit einem Durchmesser oberhalb von 0,2 mm. Im Extremfall ist es sogar möglich, durch einen offenen Filter hindurchzusehen.

Ein solches Filtersystem ist beispielsweise in den nicht vorveröffentlichten deutschen Patentanmeldungen DE 101 53 283 und DE 101 53 284 beschrieben. Bei solchen offenen Filtersystemen besteht oftmals das Problem, dass die verwendeten Filterlagen eine ungenügende mechanische Stabilität aufweisen. Dies kann durch Ausbildung entsprechender Rahmenstrukturen umgangen werden, die jedoch andere Nachteile aufweisen. Filtersysteme mit Filterlagen ohne eine Rahmenstruktur fransen bei einer pulsierenden Belastung der Filterlagen an der Gaseintrittseite relativ schnell aus, weiterhin lassen sich die Filterlagen nur schlecht zu haltbaren Strukturen formen, die gegebenenfalls zu einer Verbesserung der Filterwirkung führen können.

Hiervon ausgehend ist es Aufgabe der Erfindung, einen Abgasfilter mit Filterlagen vorzuschlagen, die eine erhöhte mechanische Stabilität und verbesserte Anbindungsmöglichkeiten an benachbarte Lagen aufweisen, sowie ein Verfahren zur Herstellung solcher Filterlagen.

Diese Aufgabe wird gelöst durch einen Abgasfilter mit den Merkmalen des Anspruchs 1, sowie ein Verfahren mit den Merkmalen des Anspruchs 17. Vorteilhafte Ausgestaltungen und Weiterbildungen sind Gegenstand der jeweiligen abhängigen Ansprüche.

Der erfindungsgemäße Abgasfilter zur Reinigung eines Abgases eines Verbrennungsmotors weist mindestens eine streifenförmige Filterlage mit einer Länge L in einer Längsrichtung und einer Breite B in einer Querrichtung aus einem zumindest teilweise für ein Fluid durchströmbaren Material der Dicke D auf, wobei die Filterlage in mindestens einem Teilbereich einen metallischen Verstärkungsbereich einer Breite VB und einer Länge VL aufweist. Die Breite VB des Verstärkungsbereichs ist kleiner als die Breite B der Filterlage und/oder die Länge VL des Verstärkungsbereichs kleiner ist als die Länge L der Filterlage.

Das Einbringen von metallischen Verstärkungsbercichen in die Filterlage gestattet in vorteilhafter Weise den Aufbau von mechanisch stabilen Filterlagen, wobei durch die Verstärkungsbereiche nur unwesentliche Anteile der durchströmbaren Oberfläche der Filterlage verdeckt werden.

Beispielsweise ist es möglich, einen Verstärkungsbereichs im Randbereich an der Gaseintrittseite einer Filterlage auszubilden, der bewirkt, dass diese deutlich länger haltbar ist als herkömmliche Produkte, da der Verstärkungsbereich in diesem Fall als Ausblasschutz wirken kann und so ein Ausfransen der Filterlagen am Rand verhindert. Die mechanischen Belastungen einer Filterlage sind im Gaseintrittsbereich besonders groß, da Abgas meist pulsierend auf die Filterlage trifft und auch die thermischen Belastungen in diesem Bereich am größten sind.

Weiterhin ermöglicht die Ausbildung von Verstärkungsbereichen eine deutlich bessere Formbarkeit, die es gestattet, auch faserförmige Filterlagen zu strukturierten Filterlagen zu formen. Dies ermöglicht den Aufbau des Abgasfilters in Form eines herkömmlichen Wabenkörpers, wobei die Filterlage als glatte Lage und/oder als strukturierte Lage verwendet werden kann. Der Wabenkörper kann weiterhin nichtporöse Blechlagen enthalten. So ist es beispielsweise erfindungsgemäß möglich, den als Abgasfilter dienenden Wabenkörper aus glatten Filterlagen und strukturierten Blechlagen in gewohnter Weise aufzubauen, oder strukturierte Filterlagen und glatte Blechlagen zu verwenden. Die Verstärkungsbereiche sind auch besonders geeignete Bereiche für fügetechnische Verbindungen zu benachbarten Lagen.

Gemäß einer vorteilhaften Ausgestaltung des erfindungsgemäßen Abgasfilters ist die Filterlage aus faserförmigem Material ausgebildet, bevorzugt ist dabei die Ausbildung der Filterlage aus Metallfasern, besonders bevorzugt aus gesinterten Metallfasern. Die Herstellung der Filterlagen aus faserförmigem Material, bevorzugt aus Metallfasern, sorgt für eine erhöhte thermische Stabilität der Filterlagen, die gerade auch in Abgasfiltern von Vorteil ist, da die Abgase eines Verbrennungsmotors eine relativ hohe Temperatur aufweisen und pulsierend auftreten. Somit ist es besonders dann vorteilhaft, die Filterlage aus Metallfasern auszubilden, wenn der Abgasfilter motornah eingebaut wird. Die Dicke solcher Filterlagen beträgt weniger als 2 mm, insbesondere weniger als 1 mm.

Gemäß einer weiteren vorteilhaften Ausführung eines erfindungsgemäßen Abgasfilters ist der mindestens eine Verstärkungsbereich an einem Rand der mindestens einen Filterlage ausgebildet. Die Ausbildung des Verstärkungsbereichs am Rand verhindert in vorteilhafter Weise das Ausfasern der Filterlage in diesem Bereich und sorgt so für eine erhöhte Lebensdauer der Filterlage.

Gemäß noch einer weiteren vorteilhaften Ausgestaltung eines erfindungsgemäßen Abgasfilters ist der Verstärkungsbereich in einem inneren Streifen ausgebildet. Die Ausbildung des Verstärkungsbereichs in einem inneren Streifen bedingt eine erhöhte Formstabilität der Filterlage und gestattet so in vorteilhafter Weise die Strukturierung der Filterlage.

Es ist erfindungsgemäß möglich, dass der Verstärkungsbereich in einem einzigen oder mehreren Streifen ausgebildet ist, die gegebenenfalls auch periodisch auftreten können. Bezüglich der Lage des Verstärkungsbereichs relativ zur Filterlage ist es möglich, dass dieser als Längsstreifen, als Querstreifen oder in einem beliebigen Winkel zu den Rändern der Filterlage ausgebildet ist. Vorteilhaft an der Ausbildung mehrerer Verstärkungsbereiche ist zum einen eine deutlich erhöhte Formstabilität der Filterlage, des weiteren ermöglicht die Ausbildung mehrerer Verstärkungsbereiche auch eine zuverlässige Anbindung der Filterlage an andere Lagen im Abgasfilter in den Verstärkungsbereichen, ohne dass die durch Gas anströmbare Oberfläche der Filterlage wesentlich durch die Verstärkungsbereiche verringert wird. Die Verstärkungsbereiche können bevorzugt eine rechteckige Form aufweisen, jedoch ist jede beliebige Form der Verstärkungsbereiche möglich und erfindungsgemäß, beispielsweise ein Oval, Kreis, Kreissegment, Dreieck usw.

Gemäß noch weiteren vorteilhaften Ausführungen eines erfindungsgemäßen Abgasfilters ist der Verstärkungsbereich durch eine Blechlage oder eine Loteinlagerung gebildet. Beide Möglichkeiten lassen sich leicht in den Herstellungsprozess einer Filterlage integrieren. Weiterhin sind diese beiden Möglichkeiten besonders vorteilhaft in Bezug auf eine metallische Filterlage, da hier in einfacher Art und Weise eine Verbindung des Verstärkungsbereichs mit der Filterlage ausgebildet werden kann, beispielsweise durch eine thermische Behandlung der Loteinlagerung oder durch Löten oder Schweißen im Falle der Blechlage. Sowohl die Möglichkeit der Ausbildung des Verstärkungsbereichs als Loteinlagerung, als auch als Blechlage bieten eine vorteilhafte Erhöhung der mechanischen Stabilität der Filterlage. Blechlagen weisen eine Dicke von weniger als 0,08 mm, insbesondere weniger als 0,04 mm oder sogar weniger als 0,02 mm auf.

Gemäß einer noch weiteren vorteilhaften Ausgestaltung eines erfindungsgemäßen Abgasfilters weist der Verstärkungsbereich eine erhöhte Materialdichte auf. So ist es beispielsweise erfindungsgemäß möglich, den Verstärkungsbereich durch Ausüben einer Presskraft auszubilden. Weiterhin ist es vorteilhaft möglich, im Verstärkungsbereich bereits bei der Ausbildung der Filterlage mehr Material vorzusehen, um so dort die Materialdichte später durch Walzen erhöhen zu können. Besonders vorteilhaft ist es in diesem Zusammenhang, den Verstärkungsbereich zu komprimieren.

Gemäß einer noch weiteren vorteilhaften Ausgestaltung eines erfindungsgemäßen Abgasfilters ist die Dicke des Verstärkungsbereichs kleiner als die Dicke des durchströmbaren Materials. Dies gestattet in vorteilhafter Weise auch die Verstärkung von im Vergleich zum Verstärkungsbereich, beispielsweise ausgebildet in Form einer Blechlage, relativ dicken Fasermaterialien, die durch dünne Verstärkungsbereiche mechanisch verstärkt werden. Je nach den Eigenschaften des Verstärkungsbereichs kann auch mit vergleichsweise dünnen Verstärkungsbereichen eine relativ große mechanische Stabilisierung der Filterlage erreicht werden.

Gemäß einer noch weiteren vorteilhaften Ausgestaltung eines erfindungsgemäßen Abgasfilters weist der Verstärkungsbereich Strukturen auf. Insbesondere, wenn die Dicke des Verstärkungsbereichs kleiner ist als die Dicke des durchströmbaren Materials, ist es möglich, durch Ausbildung von Strukturen im Verstärkungsbereich diesen an die Dicke des durchströmbaren Materials anzupassen. Dies gestattet es, mit relativ geringem Materialaufwand eine große mechanische Stabilisierung des durchströmbaren Materials zu erhalten, ohne dass dies in der Dickenausdehnung starke Schwankungen aufweist. Weiterhin ist es so auch möglich, das gesamte faserförmige Material zu strukturieren. Besonders vorteilhaft ist es in diesem Zusammenhang, wenn die äußere Gesamtamplitude der Strukturierung mindestens der Dicke des durchströmbaren Materials entspricht. Genauso vorteilhaft ist es auch, wenn die äußere Gesamtamplitude der Strukturierung kleiner ist als die Dicke des durchströmbaren Materials.

Gemäß einer noch weiteren vorteilhaften Ausgestaltung eines erfindungsgemäßen Abgasfilters ist der Verstärkungsbereich so durch den Filterabschnitt gefädelt, dass sich der Verstärkungsbereich abwechselnd auf einer ersten Längsseite und auf einer zweiten Längsseite der Filterlage befindet. Diese Ausbildung des Verstärkungsbereichs ist insbesondere zur Ausbildung eines Ausblasschutzes von Vorteil, da so auf einfache Art und Weise beide Stirnseiten der Filterlage vor dem Ausfasern geschützt werden können.

Gemäß einer noch weiteren vorteilhaften Ausgestaltung eines erfindungsgemäßen Abgasfilters ist der Verstärlcungsbereich mit einem fügetechnischen Verfahren mit der Filterlage verbunden. Eine fügetechnische Verbindung kann auf einfache Art und Weise in bereits bestehende Verfahrensabläufe zum Erstellen eines Abgasfilters eingebaut werden. So können z. B. die Verstärkungsbereiche mit der Filterlage verlötet werden, wenn eine allgemeine Verlötung des Abgasfilters zur Herstellung einer stabilen Gesamtstruktur erfolgt.

Gemäß einer noch weiteren vorteilhaften Ausgestaltung eines erfindungsgemäßen Abgasfilters ist der Verstärkungsbereich mit der Filterlage verschweißt. Hier bieten sich insbesondere Widerstandsschweißverfahren, insbesondere das Rollnahtschweißverfahren, oder Laserschweißverfahren an. Das Rollnahtschweißverfahren führt gleichzeitig dazu, dass ein gewisser Druck auf die Filterlage einwirkt, was zur Verdichtung des Materials und somit zur weiteren Verstärkung der Filterlage führen kann. Eine stabil ausgebildete Schweißnaht zwischen dem Verstärkungsbereich und der Filterlage führt zu einer weiteren mechanischen Verstärkung der Filterlage.

Auch weitere fügetechnische Verbindungsverfahren sind möglich und erfindungsgemäß. Beispielsweise der mindestens eine Verstärkungsbereich auch mit der Filterlage vernietet werden. Auch eine Kombination von fügetechnischen Verfahren, beispielsweise von Nieten und Löten oder auch Nieten und Schweißen ist möglich und erfindungsgemäß. So ist es zum Beispiel in vorteilhafter Weise möglich, eine Lötfolie als Verstärkungsbereich durch Nieten quasi vorzufixieren und den Verstärkungsbereich später durch Löten endgültig zu fixieren. Auch die Ausbildung des Verstärkungsbereichs durch Herbeiführen einer erhöhten Materialdichte ist in Verbindung mit anderen fügetechnischen Verfahren möglich.

Beispielsweise kann eine erhöhte Materialdichte durch Walzen oder Pressen herbeigeführt werden. Auch hier ist es in vorteilhafter Weise möglich, unterschiedliche Verfahren zu kombinieren, beispielsweise eine Kombination von Pressen und Schweißen, bevorzugt Widerstandsschweißen, Rollnahtschweißen oder Punktschweißen mit breiten Elektroden.

Gemäß einer weiteren vorteilhaften Ausgestaltung eines erfindungsgemäßen Abgasfilters ist der Verstärkungsbereich mit benachbarten Blechlagen verbunden. In diesem Zusammenhang ist es insbesondere vorteilhaft, dass der Verstärkungsbereich mit benachbarten Blechlagen verlötet ist. Auf diese Weise ist es möglich, eine dauerhafte Verbindung zum Beispiel zwischen einer Lage, die im wesentlichen aus faserförmigem Material ausgebildet ist und einer Blechlage zu erstellen. Dies führt zu einer Verbesserung der Haltbarkeit des erfindungsgemäßen Abgasfilters.

Gemäß einem weiteren Aspekt des erfindungsgemäßen Gedankens wird ein Verfahren vorgeschlagen, dass zur Herstellung einer Filterlage für einen Abgasfilter aus einem zumindest teilweise für einen Fluid durchströmbaren Material einer Dicke mit einer Länge in einer Längsrichtung und einer Breite in einer Querrichtung dient. In einem Teilbereich der Filterlage wird ein metallischer Verstärkungsbereich einer Breite und einer Länge ausgebildet, dessen Breite kleiner ist als die Breite der Filterlage und/oder dessen Länge kleiner ist als die Länge der Filterlage. Der Verstärkungsbereich wird fügetechnisch mit dem durchströmbaren Material verbunden.

Gemäß einer vorteilhaften Ausgestaltung des erfindungsgemäßen Verfahrens wird das durchströmbare Material aus Fasern, bevorzugt aus Metallfasern und besonders bevorzugt aus gesinterten Metallfasern ausgebildet. Filterlagen aus Metallfasern weisen eine große thermische Stabilität auf, die vorteilhaft beim Einsatz im Abgasbereich einer Verbrennungskraftmaschine ist.

Gemäß einer noch weiteren vorteilhaften Ausgestaltung des erfindungsgemäßen Verfahrens wird der Verstärkungsbercich durch eine Blechlage, eine Loteinlagerung oder einen Bereich mit erhöhter Materialdichte ausgebildet.

Gemäß einer noch weiteren vorteilhaften Ausgestaltung des erfindungsgemäßen Verfahrens wird der Verstärkungsbereich mit dem durchströmbaren Material verlötet. Die Ausbildung einer Lötverbindung kann vorteilhaft in schon vorhandene Verfahrensschritte zur Herstellung eines Abgasfilters eingebaut werden. So kann die Ausbildung der Lötverbindung im gleichen Arbeitsschritt erfolgen wie die Ausbildung anderer Lötverbindungen im Abgasfilter.

Weiterhin ist es vorteilhaft, im Verstärkungsbereich eine Schweißverbindung auszubilden. In diesem Zusammenhang ist es besonders vorteilhaft, die Schweißverbindung durch Widerstandsschweißen oder Laserschweißen, bevorzugt durch Rollnahtschweißen auszubilden. Gerade die Ausbildung einer Schweißverbindung zwischen Verstärkungsbereich und dem übrigen durchströmbaren Material durch ein Widerstandsschweißverfahren, hier besonders bevorzugt das Rollnahtschweißverfahren, ist vorteilhaft, da bei bei Ausbildung des Verstärkungsbereichs als Materialbereich mit erhöhter Materialdichte, dies in einem Arbeitsgang mit dem Rollnahtschweißen erfolgen kann, da hierbei ein Anpressdruck auf die Filterlage wirkt. Weiterhin ist durch die Verwendung von strukturierten Rollnahtschweißwerkzeugen das direkte Aufprägen einer Strukturierung im Verstärkungsbereich möglich. So kann beispielsweise das Rollnahtschweißen durch eine Art Zahnrad erfolgen, das zur Ausbildung von beispielsweise welligen Strukturen im Verstärkungsbereich und damit auch in der gesamten Filterlage - sofern in Abhängigkeit von der Steifigkeit des für ein Fluid durchströmbaren Materials - nur genug Verstärkungsbereiche vorhanden sind, führt.

Besonders vorteilhafte und bevorzugte Ausgestaltungen der Erfindung werden nachfolgend anhand der Zeichnung näher erläutert, ohne dass die Erfindung auf die dort gezeigten Ausführungsbeispiele beschränkt ist.

Es zeigen:
- Fig. 1: Schematisch und perspektivisch ein erstes Ausführungsbeispiel einer Filterlage mit Verstärlcungsbereich,
- Fig. 2: eine seitliche Ansicht des ersten Ausführungsbeispiels,
- Fig. 3: eine seitliche Ansicht eines zweiten Ausführungsbeispiels,
- Fig. 4: eine perspektivische schematische Aussicht eines dritten Ausführungsbeispiels
- Fig. 5: eine seitliche Ansicht des dritten Ausführungsbeispiels einer Filterlage,
- Fig. 6: ein viertes Ausführungsbeispiel einer Filterlage mit Verstärkungsbereich,
- Fig. 7: eine seitliche Ansicht des vierten Ausführungsbeispiels einer Filterlage,
- Fig. 8: ein Verfahren zur Herstellung eines fünften Ausführungsbeispiels einer Filterlage,
- Fig. 9: das fünfte Ausführungsbeispiel in einer seitlichen Ansicht und
- Fig. 10: schematisch und perspektivisch eine Ausführungsform des erfindungsgemäßen Abgasfilters.

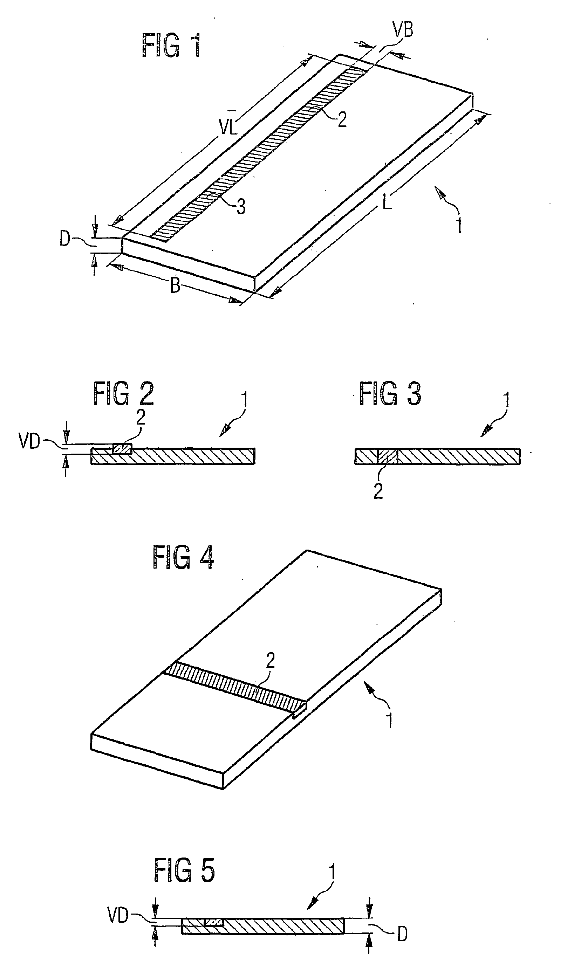

Figur 1 zeigt eine Filterlage 1, die in einer Längsrichtung eine Länge L, in einer Querrichtung eine Breite B und eine Dicke D aufweist. Die Filterlage 1 ist aus einem zumindest teilweise für ein Fluid durchströmbaren porösen Material hergestellt. Speziell ist es möglich, eine solche Filterlage 1 aus Metallfasern, insbesondere aus gesinterten Metallfasern, herzustellen. Die Filterlage 1 weist einen Verstärkungsbereich 2 auf, dessen Breite VB kleiner ist als die Breite B der Filterlage 1. Die Länge VL des Verstärkungsbereichs ist kleiner als die entsprechende Länge L der Filterlage 1.

Wie in Figur 2 dargestellt, kann die Filterlage 1 einen Verstärkungsbereich 2 aufweisen, der aus einer Blechlage 3 gebildet ist. In Figur 2 ist die Dicke VD der Blechlage 3 im Vergleich zur Dicke D der Filterlage 1 relativ groß dargestellt, sie kann auch deutlich kleiner sein. Es ist möglich, die Blechlage 3 über ein Schweißverfahren, insbesondere ein Widerstands- oder Laserschweißverfahren, besonders bevorzugt ein Rollnahtschweißverfahren, mit der Filterlage 1 zu verbinden.

Figur 3 zeigt ein zweites Ausführungsbeispiel einer Filterlage 1 mit einem Verstärkungsbereich 2. Hier ist der Verstärkungsbereich 2 dadurch ausgebildet, dass im Verstärkungsbereich 2 eine erhöhte Materialdichte vorliegt. Dies kann dadurch erreicht werden, dass bereits bei der Herstellung der Filterlage aus Metallfasern in diesem Bereich mehr Material ausgebildet wird. Um gegebenenfalls vorhandene Höhenunterschiede auszugleichen, kann später das Material in diesem Bereich komprimiert werden. Es ist auch möglich, das Fasermaterial einheitlich auszubilden und nur das Material im Verstärkungsbereich 2 zu komprimieren.

Figur 4 zeigt ein drittes Ausführungsbeispiel einer Filterlage 1 mit einem querlaufenden Verstärkungsbereich 2. Generell kann der Verstärkungsbereich 2 nicht nur quer oder längs zu den Rändern der Filterlage 1 ausgebildet sein, sondern in einem beliebigen Winkel zu den Kanten der Filterlage 1 ausgebildet werden. Jede Ausrichtung des Verstärkungsbereichs 2 in Bezug auf die Filterlage 1 ist erfindungsgemäß. Im Ausfiihrungsbeispiel in Figur 4 ist der Verstärkungsbereich 2 als Loteinlagerung ausgebildet. Hierzu kann beispielsweise der Umstand genutzt werden, dass das poröse Material, aus dem die Filterlage 1 aufgebaut ist, das flüssige Lot aufsaugt.

Figur 5 zeigt ein Ausführungsbeispiel, dass wie in Figur 4 durch Loteinlagerungen gebildet ist. Zu erkennen ist, dass der Verstärkungsbereich 2 sich nicht über die gesamte Dicke D der Filterlage_erstreckt. Die Dicke VD des Verstärkungsbereichs ist kleiner als die Dicke D. Dies kann durch eine entsprechende Bemessung der Lotmenge, die von der Filterlage 1 aufgenommen wird, und Ausbildung entsprechender Mittel zur Lotflussverhinderung erreicht werden.

Die Ausbildung der Loteinlagerung kann in vorteilhafter Weise in bereits bestehende Verfahrensschritte zur Herstellung von Abgasfiltern eingebaut werden. Oftmals werden in solchen Verfahren thermische Verfahrensschritte, wie z. B. Löten, zum Verbinden unterschiedlicher Bauteile des Abgasfilters verwendet. Hier kann das Ausbilden des Verstärkungsbereichs ohne weiteren Aufwand in den Herstellungsprozess integriert werden.

Die Tatsache, dass die Dicke VD des Verstärkungsbereichs kleiner ist als die Dicke D der Filterlage 1, dass sich also die Loteinlagerung nicht durch die gesamte Dicke D der Filterlage 1 erstreckt, führt zu einer Verstärkung der Filterlage 1, jedoch nicht zu einer vollkommenen Versteifung der Lage im Verstärkungsbereich 2. Je nach Anwendungsgebiet ist es erfindungsgemäß auch möglich, eine Loteinlagerung vorzunehmen, deren Dicke VD identisch mit der Dicke D der Filterlage ist. So erhält man eine Filterlage, die aufgrund des Verstärkungsbereichs 2 dauerhafter formbar ist als eine Filterlage 1 ohne Verstärkungsbereich 2.

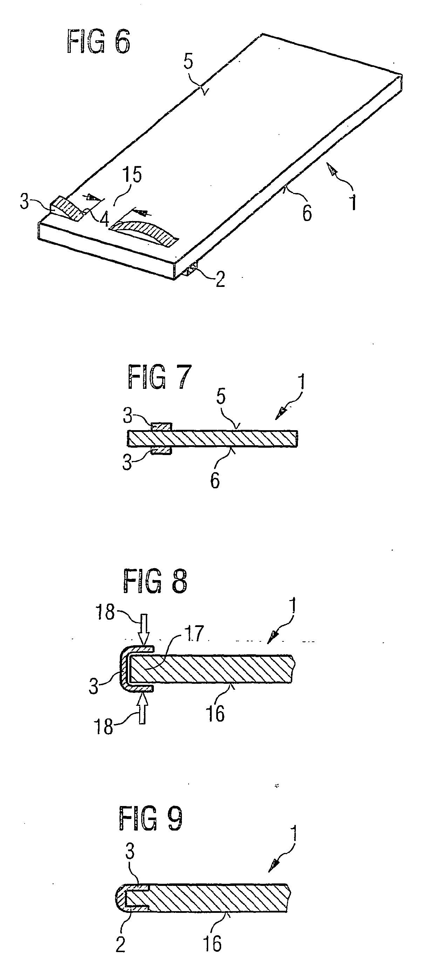

Figur 6 zeigt ein weiteres Ausführungsbeispiel einer Filterlage 1 mit einem Verstärkungsbereich 2. In diesem Ausführungsbeispiel setzt sich der Verstärkungsbereich 2 aus einer dünnen Blechlage 3 zusammen, die durch Löcher 4 in der Filterlage 1 gefädelt ist. Das Durchfädeln der Blechlage 3 durch die Löcher erfolgt in der Weise, dass sich die Blechlage 3 abwechselnd auf einer ersten Längsseite 5 und einer zweiten Längsseite 6 der Filterlage 1 befindet. Im Herstellungsprozess ist es möglich, die Blechlage 3 nach dem Durchfädeln mit der Filterlage 1 durch Rollnahtschweißen zu verbinden. In diesem Fall bildet sich eine feste Verbindung zwischen der Blechlage 3 und der Filterlage 1 aus. Die Ausbildung einer solchen Schweißverbindung ist vor allem im Randbereich der Filterlage 1 bevorzugt, da eine so mit der Filterlage 1 verbundene Blechlage 3 sich gut als Ausblasschutz an der Gaseintrittseite des Abgasfilters eignet. Jedoch lässt sich ein guter Ausblasschutz auch mit der in den anderen Ausführungsbeispielen gezeigten Anordnungen erreichen.

Durch Rollnahtschweißen mit einem Werkzeug, dass eine Struktur aufweist, beispielsweise eine Art Zahnrad, ist es möglich, die Blechlage 3 zu strukturieren. Beim Aufbau eines Abgasfilters ist es vorteilhaft, die Löcher 4 in der Filterlage 1 so zu positionieren, dass der Abstand 15 der Löcher 4 im wesentlichen der Wellenlänge der aufgeprägten Struktur entspricht. Werden nun wellenartige Strukturen aufgeprägt, so ist es weiterhin vorteilhaft, wenn die Wellenberge und/oder Wellentäler jeweils im Bereich der Löcher 4 ausgeprägt werden. So ist es möglich, eine mit einer Blechlage 3 verstärkte strukturierte Filterlage 1 herzustellen, die jeweils im Bereich der Anlage an im Abgasfilter benachbarte Lagen eine Blechlage 3 aufweist, die in vorteilhafter Weise die Ausbildung einer festen Verbindung mit der benachbarten Lage ermöglicht.

Generell beschränken sich erfindungsgemäß die Ausbildung der Streifen nicht nur auf Streifen im Randbereich, sondern jeder beliebige Bereich in der Filterlage kann mechanisch verstärkt werden. Je nach Ausbildung der Bereiche ist es auch möglich, die Filterlagen dauerhaft zu strukturieren, und sie z. B. als gewellte Lagen in einem Wabenkörper einzusetzen.

Figur 7 zeigt eine seitliche Ansicht des Ausführungsbeispiels aus Figur 6. Es ist zu erkennen, dass sich ein Teil des Blechbandes 3 auf der ersten Längsseite 5 und ein anderer Teil des Blechbandes 3 auf der zweiten Längsseite 6 der Filterlage 1 befindet.

Fig. 8 zeigt ein Verfahren zur Herstellung eines weiteren Ausführungsbeispiels einer Filterlage 1. Hierbei wird eine Blechlage 3 im Randbereich 17 eine Fasermatte 16, die aus einem porösen, für ein Fluid durchströmbaren Material besteht, um diese herumgefalzt. Anschließend wird der Randbereich 17, wie durch die die Pfeile 18 dargestellt, komprimiert. Dies kann vorteilhafterweise durch Rollnahtschweißen erfolgen, wodurch gleichzeitig mit der Komprimierung eine Schweißverbindung zwischen der Blechlage 3 und der Fasermatte 16 ausgebildet wird.

Die so hergestellte verstärkte Filterlage 1 ist in Figur 9 gezeigt. Sie weist einen Verstärkungsbereich 2 im Randbereich 17 der Filterlage 1 auf. Dieser kann beim Aufbau eines Abgasfilters mit benachbarten Blechlagen verbunden werden, beispielsweise durch Ausbildung einer Lötverbindung. Zudem ist die Ausbildung eines randseitigen Verstärkungsbereichs 2 durch ein umgefalztes Blech 3 in einer Filterlage 1 besonders vorteilhaft als Ausblasschutz einzusetzen.

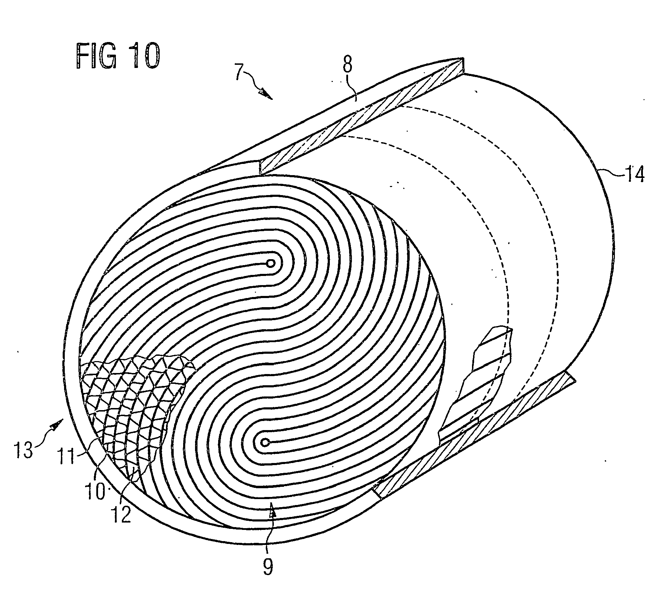

Die in den Figuren 1 bis 9 gezeigten Ausführungsbeispiele von Filterlagen mit metallischen Verstärkungsbereichen eignen sich zum Aufbau eines erfindungsgemäßen, in Fig. 10 dargestellten Abgasfilters 7, der als Wabenkörper bestehend aus einem Mantelrohr 8 und einer Wabenstruktur 9 aufgebaut ist. Die Wabenstruktur 9 besteht aus gewellten Lagen 10 und glatten Lagen 11, die für ein Fluid durchströmbare Kanäle 12 bilden. Erfindungsgemäß ist es möglich, die glatten Lagen 11 und/oder die gewellten Lagen 10 aus einer Filterlage mit metallischen Verstärkungsbereich aufzubauen. Werden nun beispielsweise die glatten Lagen 11 aus Filterlagen 1 mit Verstärkungsbereichen 2 aufgebaut, so ist es möglich, die gewellten Lagen 10 aus normalen Blechlagen aufzubauen. Diese können Strukturen und Durchbrechungen aufweisen, die das durch den Abgasfilter 7 strömende Gas zur als Filterlage 1 ausgebildeten glatten Lage 11 lenken.

Auch wenn die gewellten Lagen 10 aus Filterlagen 1 mit Verstärkungsbereichen 2 ausgebildet werden, ist es möglich, die glatten Lagen 11 mit Strukturen zu versehen, die eine Verwirbelung und Ablenkung des den Abgasfilter 7 durchströmenden Gasstroms in Richtung der als Filterlage 1 ausgebildeten gewellten Lagen 10 bewirken.

Erfindungsgemäß ist es vorteilhaft, beim Einbau des Abgasfilters 7 in den Abgasstrang eines Verbrennungsmotors, bevorzugt die Gaseintrittseite 13 des Abgasfilters 7 mit Verstärkungsbereichen 2 auszubilden. Diese dienen als Ausblasschutz, der ein Ausfransen der Filterlagen 1 aufgrund von heißen und pulsierenden Gasströmen eines Abgases verhindert. Das Problem des Ausfransens ist an der Gasaustrittseite 14 geringer, jedoch können erfindungsgemäß auch dort Verstärkungsstrukturen, beispielsweise zur reinen mechanischen Verstärkung und Stabilisierung der Wabenstruktur ausgebildet sein.

Ein erfindungsgemäß ausgebildeter Abgasfilter ist zumindest teilweise aus Filterlagen 1 mit Verstärkungsbereichen 2 gebildet. Die Ausbildung des Verstärkungsbereichs 2 dient der mechanischen Stabilisierung der Filterlage 1. Weiterhin kann im Verstärkungsbereich 2 eine fügetechnische Verbindung zu benachbarten Blechlagen 10, 11 im Abgasfilter ausgebildet werden.

### Bezugszeichenliste

- 1: Filterlage
- 2: Verstärkungsbereich
- 3: Blechlage
- 4: Loch
- 5: erste Längsseite
- 6: zweite Längsseite
- 7: Abgasfilter
- 8: Mantelrohr
- 9: Wabenstruktur
- 10: gewellte Lage
- 11: glatte Lage
- 12: Kanal
- 13: Gaseintrittsseite
- 14: Gasaustrittsseite
- 15: Abstand zweier Löcher
- 16: Fasermatte
- 17: Randbereich
- 18: Pfeile

- B: Breite der Filterlage
- D: Dicke der Filterlage
- L: Länge der Filterlage
- VB: Breite des Verstärkungsbereichs
- VD: Dicke des Verstärkungsbereichs
- VL: Länge des Verstärkungsbereichs

## Patentansprüche

1. Abgasfilter (7) zur Reinigung eines Abgases eines Verbrennungsmotors gebildet aus mindestens einer streifenförmigen Filterlage (1) mit einer Länge (L) in einer Längsrichtung und einer Breite (B) in einer Querrichtung aus einem zumindest teilweise für ein Fluid durchströmbaren Material der Dicke (D), wobei die Filterlage (1) in mindestens einem Teilbereich einen metallischen Verstärkungsbereich (2) einer Breite (VB) und einer Länge (VL) aufweist, **dadurch gekennzeichnet, dass** die Breite (VB) des Verstärkungsbereichs (2) kleiner ist als die Breite (B) der Filterlage (1) und/oder die Länge (VL) des Verstärkungsbereichs (2) kleiner ist als die Länge (L) der Filterlage (1).

2. Abgasfilter (7) nach Anspruch 1, **dadurch gekennzeichnet, dass** die Filterlage (1) aus faserförmigem Material ausgebildet ist, bevorzugt aus Metallfasern, besonders bevorzugt aus gesinterten Metallfasern.

3. Abgasfilter (7) nach einem der vorhergehenden Ansprüche, **dadurch gekennzeichnet, dass** der mindestens eine Verstärkungsbereich (2) an einem Rand der mindestens einen Filterlage (1) ausgebildet ist.

4. Abgasfilter (7) nach Anspruch 1 oder 2, **dadurch gekennzeichnet, dass** der Verstärkungsbereich (2) in einem inneren Streifen ausgebildet ist.

5. Abgasfilter (7) nach einem der vorhergehenden Ansprüche, **dadurch gekennzeichnet, dass** der Verstärkungsbereich (2) durch eine Blechlage (3) gebildet ist.

6. Abgasfilter (7) nach einem der Ansprüche 1 bis 4, **dadurch gekennzeichnet, dass** der Verstärkungsbereich (2) durch eine Loteinlagerung gebildet ist.

7. Abgasfilter (7) nach Anspruch einem der Ansprüche 1 bis 4, **dadurch gekennzeichnet, dass** der Verstärkungsbereich (2) eine erhöhte Materialdichte aufweist.

8. Abgasfilter (7) nach Anspruch 7, **dadurch gekennzeichnet, dass** der Verstärkungsbereich (2) komprimiert ist.

9. Abgasfilter (7) nach einem der vorhergehenden Ansprüche, **dadurch gekennzeichnet, dass** die Dicke (VD) des Verstärkungsbereiches (2) kleiner ist als die Dicke (D) des durchströmbaren Materials.

10. Abgasfilter (7) nach einem der vorhergehenden Ansprüche, **dadurch gekennzeichnet, dass** der Verstärkungsbereich (2) Strukturen aufweist.

11. Abgasfilter (7) nach Anspruch 10, **dadurch gekennzeichnet, dass** die Strukturen eine äußere Gesamtamplitude aufweisen, die mindestens der Dicke (D) des durchströmbaren Materials entspricht.

12. Abgasfilter (7) nach Anspruch 10, **dadurch gekennzeichnet, dass** die Strukturen eine äußere Gesamtamplitude aufweisen, die kleiner als die Dicke (D) des durchströmbaren Materials ist.

13. Abgasfilter (7) nach einem der vorhergehenden Ansprüche, **dadurch gekennzeichnet, dass** der Verstärkungsbereich (2) so durch den Filterabschnitt gefädelt ist, dass sich der Verstärkungsbereich (2) abwechselnd auf einer ersten Längsseite (5) und auf einer zweiten Längsseite (6) der Filterlage (1) befindet.

14. Abgasfilter (7) nach einem der vorhergehenden Ansprüche, **dadurch gekennzeichnet, dass** der Verstärkungsbereich (2) mit einem fügetechnischen Verfahren mit der Filterlage (1) verbunden ist.

15. Abgasfilter (7) nach Anspruch 14, **dadurch gekennzeichnet, dass** der Verstärkungsbereich (2) mit der Filterlage (1) verschweißt ist.

16. Abgasfilter (7) nach einem der vorhergehenden Ansprüche, **dadurch gekennzeichnet, dass** der Verstärkungsbereich (2) mit benachbarten Blechlagen (10, 11) verbunden ist.

17. Abgasfilter (7) nach Anspruch 16, **dadurch gekennzeichnet, dass** der Verstärkungsbereich (2) mit benachbarten Blechlagen (10, 11) verlötet ist.

18. Verfahren zur Herstellung einer Filterlage (1) für einen Abgasfilter aus einem zumindest teilweise für ein Fluid durchströmbaren Material einer Dicke (D) mit einer Länge (L) in einer Längsrichtung und einer Breite (B) in einer Querrichtung, **dadurch gekennzeichnet, dass** in mindestens einem Teilbereich der Filterlage (1) ein metallischer Verstärkungsbereich einer Breite (VB) und einer Länge (VL) ausgebildet wird, dessen Breite (VB) kleiner ist als die Breite (B) der Filterlage (1) und/oder dessen Länge (VL) kleiner ist als die Länge (L) der Filterlage (1) und dass der Verstärkungsbereich (2) fügetechnisch mit dem durchströmbaren Material verbunden wird.

19. Verfahren nach Anspruch 18, **dadurch gekennzeichnet, dass** das durchströmbare Material aus Fasern, bevorzugt aus Metallfasern und besonders bevorzugt aus gesinterten Metallfasern ausgebildet.

20. Verfahren nach einem der Ansprüche 18 oder 19, **dadurch gekennzeichnet, dass** der Verstärkungsbereich (2) durch einen Blechlage (3), eine Loteinlagerung oder einen Bereich mit erhöhter Materialdichte ausgebildet wird.

21. Verfahren nach einem der Ansprüche 18 bis 20, **dadurch gekennzeichnet, dass** der Verstärkungsbereich (2) mit dem durchströmbaren Material verlötet wird.

22. Verfahren nach einem der Ansprüche 18 bis 20, **dadurch gekennzeichnet, dass** im Verstärkungsbereich (2) eine Schweißverbindung ausgebildet wird.

23. Verfahren nach Anspruch 22, **dadurch gekennzeichnet, dass** die Ausbildung der Schweißverbindung durch Widerstandsschweißen oder Laserschweißen, bevorzugt durch Rollnahtschweißen erfolgt.

## Claims

1. An exhaust gas filter (7) for cleaning an exhaust gas of an internal combustion engine comprising at least one strip-shaped filter layer (1) with a length (L) in a longitudinal direction and a width (B) in a transverse direction, made of a material through which a fluid can at least partly flow, of the thickness (D), the filter layer (1) having in at least a partial region a metallic reinforcing region (2) of a width (VB) and a length (VL), **characterized in that** the width (VB) of the reinforcing region (2) is less than the width (B) of the filter layer (1) and/or the length (VL) of the reinforcing region (2) is less than the length (L) of the filter layer (1).

2. The exhaust gas filter (7) as claimed in claim 1, **characterized in that** the filter layer (1) is formed from fibrous material, preferably from metal fibers, particularly preferably from sintered metal fibers.

3. The exhaust gas filter (7) as claimed in one of the preceding claims, **characterized in that** the at least one reinforcing region (2) is formed at an edge of the at least one filter layer (1).

4. The exhaust gas filter (7) as claimed in claim 1 or 2, **characterized in that** the reinforcing region (2) is formed in an inner strip.

5. The exhaust gas filter (7) as claimed in one of the preceding claims, **characterized in that** the reinforcing region (2) is formed by a sheet-metal layer (3).

6. The exhaust gas filter (7) as claimed in one of claims 1 to 4, **characterized in that** the reinforcing region (2) is formed by a brazing material inclusion.

7. The exhaust gas filter (7) as claimed in one of claims 1 to 4, **characterized in that** the reinforcing region (2) has an increased material density.

8. The exhaust gas filter (7) as claimed in claim 7, **characterized in that** the reinforcing region (2) is compressed.

9. The exhaust gas filter (7) as claimed in one of the preceding claims, **characterized in that** the thickness (VD) of the reinforcing region (2) is less than the thickness (D) of the material which can be flowed through.

10. The exhaust gas filter (7) as claimed in one of the preceding claims, **characterized in that** the reinforcing region (2) has structures.

11. The exhaust gas filter (7) as claimed in claim 10, **characterized in that** the structures have an outer total amplitude which corresponds at least to the thickness (D) of the material which can be flowed through.

12. The exhaust gas filter (7) as claimed in claim 10, **characterized in that** the structures have an outer total amplitude which is less than the thickness (D) of the material which can be flowed through.

13. The exhaust gas filter (7) as claimed in one of the preceding claims, **characterized in that** the reinforcing region (2) is threaded through the filter portion in such a way that the reinforcing region (2) is alternately on a first longitudinal side (5) and on a second longitudinal side (6) of the filter layer (1).

14. The exhaust gas filter (7) as claimed in one of the preceding claims, **characterized in that** the reinforcing region (2) is connected to the filter layer (1) by a method using a joining technique.

15. The exhaust gas filter (7) as claimed in claim 14, **characterized in that** the reinforcing region (2) is welded to the filter layer (1).

16. The exhaust gas filter (7) as claimed in one of the preceding claims, **characterized in that** the reinforcing region (2) is connected to adjacent sheet-metal layers (10, 11).

17. The exhaust gas filter (7) as claimed in claim 16, **characterized in that** the reinforcing region (2) is brazed to adjacent sheet-metal layers (10, 11).

18. A method for the production of a filter layer (1) for an exhaust gas filter from a material through which a fluid can at least partly flow, of a thickness (D) with a length (L) in a longitudinal direction and a width (B) in a transverse direction, **characterized in that** formed in at least a partial region of the filter layer (1) is a metallic reinforcing region of a width (VB) and a length (VL), the width (VB) of which is less than the width (B) of the filter layer (1) and/or the length (VL) of which is less than the length (L) of the filter layer (1) and **in that** the reinforcing region (2) is connected by a joining technique to the material which can be flowed through.

19. The method as claimed in claim 18, **characterized in that** the material which can be flowed through is formed from fibers, preferably from metal fibers and particularly preferably from sintered metal fibers.

20. The method as claimed in either of claims 18 and 19, **characterized in that** the reinforcing region (2) is formed by a sheet-metal layer (3), a brazing material inclusion or a region with increased material density.

21. The method as claimed in one of claims 18 to 20, **characterized in that** the reinforcing region (2) is brazed to the material which can be flowed through.

22. The method as claimed in one of claims 18 to 20, **characterized in that** a welded connection is formed in the reinforcing region (2).

23. The method as claimed in claim 22, **characterized in that** the formation of the welded connection takes place by resistance welding or laser welding, preferably by roller seam welding.

## Revendications

1. Filtre pour gaz d'échappement (7) pour l'épuration d'un gaz d'échappement d'un moteur à combustion interne, formé d'au moins une couche de filtre en forme de bande (1) avec une longueur (L) en une direction longitudinale et une largeur (B) en une direction transversale d'un matériau à travers lequel un fluide peut s'écouler au moins partiellement, le matériau ayant l'épaisseur (D), dans quel cas la couche de filtre (1) a au moins dans une région partielle une région de renforcement métallique (2) d'une largeur (VB) et d'une longueur (VL), **caractérisé en ce que** la largeur (VB) de la région de renforcement (2) est plus petite que la largeur (B) de la couche de filtre (1) et/ou la longueur (VL) de la région de renforcement (2) est plus petite que la longueur (L) de la couche de filtre (1).

2. Filtre pour gaz d'échappement (7) selon la revendication 1, **caractérisé en ce que** la couche de filtre (1) est réalisée de matériau fibreux, de préférence de fibres métalliques, particulièrement préféré de fibres métalliques frittées.

3. Filtre pour gaz d'échappement (7) selon l'une des revendications précédentes, **caractérisé en ce que** l'au moins une région de renforcement (2) est formée sur un bord de l'au moins une couche de filtre (1).

4. Filtre pour gaz d'échappement (7) selon la revendication 1 ou 2, **caractérisé en ce que** la région de renforcement (2) est formée dans une bande intérieure.

5. Filtre pour gaz d'échappement (7) selon l'une des revendications précédentes, **caractérisé en ce que** la région de renforcement (2) est formée par une couche de tôle (3).

6. Filtre pour gaz d'échappement (7) selon l'une des revendications 1 à 4, **caractérisé en ce que** la région de renforcement (2) et formée par une inclusion de matériau de brasage.

7. Filtre pour gaz d'échappement (7) selon l'une des revendications 1 à 4, **caractérisé en ce que** la région de renforcement (2) a une densité de matériau augmentée.

8. Filtre pour gaz d'échappement (7) selon la revendication 7, **caractérisé en ce que** la région de renforcement (2) est compressée.

9. Filtre pour gaz d'échappement (7) selon l'une des revendications précédentes, **caractérisé en ce que** l'épaisseur (VD) de la région de renforcement (2) est plus petite que l'épaisseur (D) du matériau qui peut être traversé.

10. Filtre pour gaz d'échappement (7) selon l'une des revendications précédentes, **caractérisé en ce que** la région de renforcement (2) a des structures.

11. Filtre pour gaz d'échappement (7) selon la revendication 10, **caractérisé en ce que** les structures ont une amplitude totale extérieure qui correspond au moins à l'épaisseur (D) du matériau qui peut être traversé.

12. Filtre pour gaz d'échappement (7) selon la revendication 10, **caractérisé en ce que** les structures ont une amplitude totale extérieure qui est plus petite que l'épaisseur (D) du matériau pouvant être traversé.

13. Filtre pour gaz d'échappement (7) selon l'une des revendications précédentes, **caractérisé en ce que** la région de renforcement (2) est enfilée de manière telle à travers la section de filtre que la région de renforcement (2) se trouve en alternance sur un premier coté longitudinal (5) et sur un deuxième coté longitudinal (6) de la couche de filtre (1).

14. Filtre pour gaz d'échappement (7) selon l'une des revendications précédentes, **caractérisé en ce que** la région de renforcement (2) est reliée à la couche de filtre (1) par un procédé de technique de jointoiement.

15. Filtre pour gaz d'échappement (7) selon la revendication 14, **caractérisé en ce que** la région de renforcement (2) est soudée à la couche de filtre (1).

16. Filtre pour gaz d'échappement (7) selon l'une des revendications précédentes, **caractérisé en ce que** la région de renforcement (2) est reliée à des couches de tôle adjacentes (10, 11).

17. Filtre pour gaz d'échappement (7) selon la revendication 16, **caractérisé en ce que** la région de renforcement (2) est brasée à des couches de tôle adjacentes (10, 11).

18. Procédé pour la fabrication d'une couche de filtre (1) pour un filtre pour gaz d'échappement d'un matériau d'une épaisseur (D) à travers lequel un fluide peut s'écouler au moins partiellement, avec une longueur (L) en une direction longitudinale et une largeur (B) en une direction transversale, **caractérisé en ce que** dans au moins une région partielle de la couche de filtre (1) une région de renforcement métallique d'une largeur (VB) et d'une longueur (VL) est formée, dont la largeur (VB) est plus petite que la largeur (B) de la couche de filtre (1) et/ou dont la longueur (VL) est plus petite que la longueur (L) de la couche de filtre (1) et **en ce que** la région de renforcement (2) est reliée par technique de jointoiement au matériau pouvant être traversé.

19. Procédé selon 1a revendication 18, **caractérisé en ce que** le matériau pouvant être traversé est réalisé de fibres, de préférence de fibres métalliques et particulièrement préféré de fibres métalliques frittées.

20. Procédé selon l'une des revendications 18 ou 19, **caractérisé en ce que** la région de renforcement (2) est réalisée par une couche de tôle (3), une inclusion de matériau de brasage ou une région avec la densité de matériau augmentée.

21. Procédé selon l'une des revendications 18 à 20, **caractérisé en ce que** la région de renforcement (2) est brasée au matériau pouvant être traversé.

22. Procédé selon l'une des revendications 18 à 20, **caractérisé en ce qu'**une connexion soudée est formée dans la région de renforcement (2).

23. Procédé selon la revendication 22, **caractérisé en ce que** la formation de la connexion soudée est effectuée par le soudage par résistance ou par le soudage au laser, de préférence par le soudage pas-à-pas par molette.
